# EUROPÄISCHE PATENTSCHRIFT

(11) **EP 3 688 336 B1**
(45) Veröffentlichungstag und Bekanntmachung des Hinweises auf die Patenterteilung: **11.08.2021**
(21) Anmeldenummer: 18730747.5
(22) Anmeldetag: 11.06.2018
(51) Int. Cl.: F16G 5/20, F16G 5/08

(54) **TREIBRIEMEN UND VERFAHREN ZU DESSEN HERSTELLUNG**
DRIVE BELT AND METHOD FOR THE PRODUCTION THEREOF
COURROIE D'ENTRAÎNEMENT ET PROCÉDÉ POUR SA FABRICATION

(30) Priorität: 29.09.2017 DE 102017217484
(43) Veröffentlichungstag der Anmeldung: 05.08.2020
(73) Patentinhaber: ContiTech Antriebssysteme GmbH, 30165 Hannover (DE)
(72) Erfinder: FISS, Tim, 30519 Hannover (DE); BONKOWSKI, Manfred, 30900 Wedemark (DE)
(74) Vertreter: Continental Corporation
(86) Internationale Anmeldenummer: PCT/EP2018/065250
(87) Internationale Veröffentlichungsnummer: WO 2019/063143

(56) Entgegenhaltungen:
- EP-A2- 0 481 652
- WO-A2-02/46642

## Beschreibung

Die Erfindung betrifft einen Treibriemen für einen Zugmitteltrieb, mit einer radial außen angeordneten Decklage aus einem faserhaltigen oder ein Fasergeflecht enthaltenden Elastomer, mit einer radial mittig angeordneten Zugträgerlage aus einem gewickelten Zugstrang oder mehreren umfangsseitig ausgerichteten Zugsträngen und einem radial innen angeordneten Unterbau aus einem Elastomer, wobei in dem Unterbau mindestens eine keilförmige Rippe eingeformt ist, auf dessen Außenflächen eine Beschichtungslage aus einem umfangsseitig offenen Fasergeflecht aufgebracht ist. Die Erfindung betrifft außerdem ein Verfahren zur Herstellung eines derartigen Treibriemens.

In Zugmitteltrieben werden Treibriemen zur reibschlüssigen Kraftübertragung zwischen mindestens zwei Riemenscheiben verwendet. So wird zum Beispiel in einem Nebenaggregatezug eines Verbrennungsmotors üblicherweise ein als Keilriemen oder Keilrippenriemen ausgebildeter Treibriemen zum Antrieb mindestens eines elektrischen Generators verwendet. Der Treibriemen wird dort über mindestens eine Umlenkrolle umgelenkt und mittels einer Spannrolle gespannt, welche jeweils an der Decklage des Treibriemens mit diesem in Kontakt sind. Die in der Deckschicht enthaltenen Fasern oder das in dieser enthaltene Fasergeflecht dienen beziehungsweise dient zur Erhöhung der Abriebfestigkeit, zur Geräuschdämpfung und zur Reduzierung der Reibung mit den Triebrollen. Ebenso dient auch die auf die Außenflächen der mindestens einen Rippe aufgebrachte Beschichtungslage aus einem Fasergeflecht zur Erhöhung der Abriebfestigkeit, zur Geräuschdämpfung und zur Reduzierung der Reibung mit den Riemenscheiben.

Entsprechende Keilrippenriemen, bei denen auf den Außenflächen der Rippen jeweils eine Beschichtungslage mit einem Fasergeflecht aus unterschiedlichen Fasern oder Fasermischungen aufgebracht ist, sind zum Beispiel aus der US 3 981 206 A, der DE 10 2006 007 509 B4 und der DE 10 2007 042 917 A1 bekannt.

Bei der Herstellung derartiger Treibriemen werden die Lagen eines mehrere Treibriemen enthaltenden Riemenwickels in radial umgekehrter Reihenfolge auf eine Riemenaufbautrommel aufgebracht. Da die Riemenaufbautrommel drehbar gelagert ist, wird das Fasergeflecht der Beschichtungslage üblicherweise nicht aus einem an sich vorteilhaften, umfangsseitig geschlossenen Gewebeschlauch sondern von einer Geweberolle abgetrennt. Die Länge des abgetrennten Fasergeflechtes entspricht dem Außenumfang des zuvor auf die Riemenaufbautrommel aufgebrachten Unterbaus. Die Rippen werden während des Vulkanisationsvorgangs durch eine entsprechend konturierte Vulkanisationsform in den mit dem Fasergeflecht belegten Unterbau eingepresst. Nach dem Vulkanisieren und Abkühlen werden die Treibriemen durch Abschneiden aus dem Riemenwickel abgetrennt und durch Umstülpen in ihre einbaufertige Form gebracht.

Durch die Erwärmung und das Einpressen der Rippen in den Unterbau des Riemenrohlings während des Vulkanisationsvorgangs ergibt sich zwangsläufig eine mehr oder weniger breite Trennfuge zwischen den umfangsseitigen Enden der Beschichtungslage, der durch das Elastomer des Unterbaus ausgefüllt wird. Hierdurch ergibt sich an den reibschlüssig kraftübertragenden Flanken der Rippen jeweils ein Querstreifen mit einem erhöhten Reibungsbeiwert. Der im Vergleich zu trennfugenfernen Bereichen erhöhte Reibungsbeiwert wird durch das im Bereich der Trennfuge vermehrt vorhandene Elastomer des Unterbaus verursacht. Der erhöhte Reibungsbeiwert führt im späteren Einsatz zum Auftreten von hohen, lokal begrenzten Scherspannungen. In Folge dieser Scherspannungen kann es im Bereich der Trennfuge zur Erzeugung unerwünschter Betriebsgeräusche kommen.

Die EP 0481652 A2 offenbart ein Herstellungsverfahren von Antriebsriemen, insbesondere von Keilrippenriemen, bei dem u.a. die Riemenrückenseite mit einer Gewebelage beschichtet ist. Dazu wird die Gewebelage vor der Vulkanisation auf der Aufbautrommel so aufgebracht, dass die Enden der Gewebelage spitzwinklig geschnitten und mithilfe einer Naht oder einer Verklebung auf Stoß miteinander verbunden werden. Nachteiligerweise sind Nähte oder Klebungen in der Regel mit einer, wenn auch kleineren Unstetigkeit verbunden, die untere anderem auch den Reibungsbeiwert im späteren Betrieb beeinflussen kann.

Der vorliegenden Erfindung lag daher die Aufgabe zugrunde, einen Treibriemen der eingangs genannten Bauart vorzuschlagen, bei dem die sprunghafte Änderung des Reibungsbeiwertes an den kraftübertragenden Flanken der Rippen vermieden wird. Außerdem soll ein Verfahren zur Herstellung eines derartigen Treibriemens beschrieben werden.

Die den Treibriemen betreffende Aufgabe ist in Verbindung mit den Merkmalen des Oberbegriffs des Anspruchs 1 dadurch gelöst, dass die umfangsseitigen Enden der Beschichtungslage und eine von dem Elastomer des Unterbaus gefüllte Trennfuge zwischen diesen umfangsseitigen Enden der Beschichtungslage mit einem Querstreifen aus einem vulkanisiertauglichen Material bedeckt sind, wobei dieses vulkanisiertaugliche Material im Vergleich zum Elastomer des Unterbaus einen reduzierten Reibungsbeiwert aufweist.

Die Erfindung geht demnach von einem an sich bekannten Treibriemen für einen Zugmitteltrieb aus, der eine radial außen angeordnete Decklage aus einem faserhaltigen oder ein Fasergeflecht enthaltenden Elastomer, eine radial mittig angeordnete Zugträgerlage aus einem gewickelten Zugstrang oder mehreren umfangsseitig ausgerichteten Zugsträngen und einen radial innen angeordneten Unterbau aus einem Elastomer aufweist. In den Unterbau des Treibriemens ist mindestens eine keilförmige Rippe eingeformt, auf deren Außenflächen eine Beschichtungslage aus einem in Umfangsrichtung offenen Fasergeflecht aufgebracht ist.

Um eine sprunghafte Änderung des Reibungsbeiwertes an den kraftübertragenden Flanken der Rippen des Treibriemens zu vermeiden, sind die umfangsseitigen Enden der Beschichtungslage und die von Elastomer des Unterbaus gefüllte Trennfuge zwischen den umfangsseitigen Enden der Beschichtungslage mit einem Querstreifen aus einem vulkanisiertauglichen Material mit reduziertem Reibungsbeiwert bedeckt. Somit wird im späteren Einsatz das Auftreten von hohen Scherspannungen im Bereich der Trennfuge zwischen den umfangsseitigen Enden der Beschichtungslage und infolgedessen die Erzeugung unerwünschter Betriebsgeräusche in diesem Bereich vermieden.

Bei dem Material des Querstreifens handelt es sich bevorzugt um einen Zweikomponenten-Nitrilschaum (2K-NFT), dessen Reibungsbeiwert, Verschleißfestigkeit und Dämpfungseigenschaften weitgehend den entsprechenden Werten der üblichen Beschichtungslagen entspricht.

Zur Feineinstellung des Reibungsbeiwertes und der Dämpfungseigenschaften kann der Querstreifen zusätzlich mit einem Fasermaterial beflockt sein, wodurch der Reibungsbeiwert weiter gesenkt und die Geräuschdämpfung weiter verstärkt wird.

Die das Verfahren zur Herstellung eines Treibriemens betreffende Aufgabe ist durch die folgenden Verfahrensschritte gelöst:
a) Aufbringen einer Decklage aus einem faserhaltigen oder ein Fasergeflecht enthaltenden Elastomer auf eine Riemenaufbautrommel,
b) Umwickeln der Decklage mit einem Zugstrang oder mehreren umfangsseitig ausgerichteten Zugsträngen zur Bildung einer Zugträgerlage,
c) Aufbringen eines Unterbaus aus einem Elastomer auf die Zugträgerlage,
d) Aufbringen einer Beschichtungslage aus einem umfangsseitig offenen Fasergeflecht auf den Unterbau,
e) Auftragen eines Querstreifens aus einem vulkanisiertauglichen Material mit im Vergleich zum Elastomer des Unterbaus reduziertem Reibungsbeiwert auf die umfangsseitigen Enden der Beschichtungslage und die Trennfuge zwischen den umfangsseitigen Enden der Beschichtungslage,
f) Abnehmen des Riemenrohlings von der Riemenaufbautrommel und Einsetzen desselben in eine heizbare Vulkanisationsform,
g) Vulkanisieren des Riemenrohlings unter Einformung von Rippen in den Unterbau, die Beschichtungslage und den Querstreifen des Riemenrohlings,
h) nach dem Abkühlen dann Entnahme des Riemenrohlings aus der Vulkanistationsform, und
i) Abschneiden von Treibriemen von dem Riemenrohling und Umstülpen der Treibriemen.

Das vor der Vulkanisierung zähflüssige Material des Querstreifens, bei dem bevorzugt ein Zweikomponenten-Nitrilschaum (2K-NFT) verwendet wird, kann mittels einer Rolle oder durch Aufsprühen aufgetragen werden.

Zur Feinjustierung des Reibungsbeiwertes und der Dämpfungseigenschaften kann der Querstreifen nach seinem Auftragen zusätzlich mit einem Fasermaterial beflockt werden.

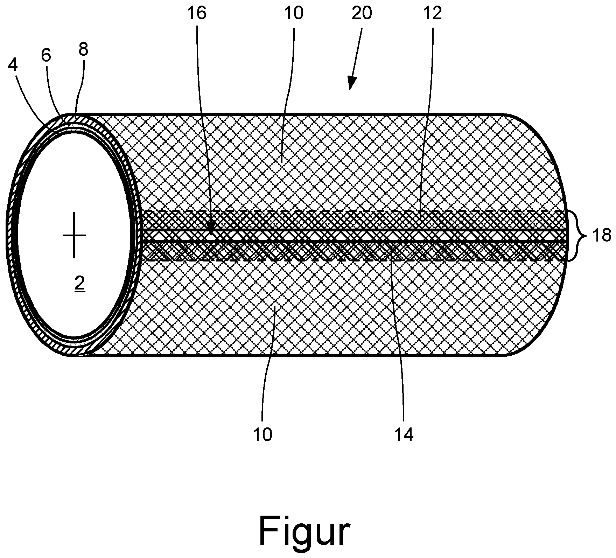

Zur weiteren Verdeutlichung der Erfindung ist der Beschreibung eine Zeichnung eines Ausführungsbeispiels beigefügt. In dieser zeigt die einzige Figur in einer schematischen Ansicht einen noch nicht vulkanisierten Riemenwickel 20 auf einer Riemenaufbautrommel 2, von dem nach dem Vulkanisieren mehrere Treibriemen abtrennbar sind.

Auf der Riemenaufbautrommel 2 sind radial von innen nach außen gesehen eine Decklage 4 aus einem faserhaltigen oder ein Fasergeflecht enthaltenden Elastomer, eine Zugträgerlage 6 mit einem Zugstrang oder mehreren umfangsseitig ausgerichteten Zugsträngen sowie ein Unterbau 8 aus einem Elastomer aufgebracht. Auf den Unterbau 8, in den beim späteren Vulkanisieren die Rippen mehrerer Treibriemen eingepresst werden, ist eine Beschichtungslage 10 aus einem in Umfangsrichtung offenen Fasergeflecht aufgebracht. Die Beschichtungslage 10 weist daher zwei achsparallel ausgerichtete und unmittelbar benachbarte Enden 12, 14 auf.

Um eine sprunghafte Erhöhung des Reibungsbeiwertes durch das in der Trennfuge 16 zwischen den beiden umfangsseitigen Enden 12, 14 der Beschichtungslage 10 außenliegende Elastomer des Unterbaus 8 zu vermeiden, ist dieser Bereich mit einem geschlossenen Querstreifen 18 aus einem vulkanisiertauglichen Material bedeckt. Dieses Material des Querstreifens 18 weist im Vergleich zum Elastomer des Unterbaus 8 einen reduzierten Reibungsbeiwert auf.

Das Material des Querstreifens 18, bei dem es sich bevorzugt um einen Zweikomponenten-Nitrilschaum (2K-NFT) handelt, ist mittels einer Rolle oder durch Aufsprühen derart aufgetragen, dass die umfangsseitigen Enden 12, 14 der Beschichtungslage 10 und die von Elastomer des Unterbaus 8 gefüllte Trennfuge 16 mit dem vulkanisiertauglichen Material mit reduziertem Reibungsbeiwert bedeckt sind.

Nach dem Vulkanisieren und Abkühlen werden mehrere Treibriemen von dem aus der Decklage 4, der Zugträgerlage 6, dem Unterbau 8 und der Beschichtungslage 10 sowie dem Querstreifen 18 gebildeten Riemenwickel 20 abgeschnitten und durch Umstülpen in ihre einbaufertige Form gebracht.

Da der Reibungsbeiwert, die Verschleißfestigkeit und die Dämpfungseigenschaften des Nitrilschaums (NFT) weitgehend den entsprechenden Werten der Beschichtungslage 10 entsprechen, treten an den reibschlüssig kraftübertragenden Flanken der Treibriemen im Betrieb keine hohen, lokal begrenzten Scherspannungen mehr auf. Hierdurch wird die Erzeugung unerwünschter Betriebsgeräusche in den betreffenden Zugmitteltrieben vermieden.

### Bezugszeichenliste

### (Teil der Beschreibung)

- 2: Riemenaufbautrommel
- 4: Decklage
- 6: Zugträgerlage
- 8: Unterbau
- 10: Beschichtungslage, Fasergeflecht
- 12: Erstes umfangsseitiges Ende des Unterbaus
- 14: Zweites umfangsseitiges Ende des Unterbaus
- 16: Trennfuge
- 18: Querstreifen
- 20: Riemenwickel

## Patentansprüche

1. Treibriemen für einen Zugmitteltrieb, mit einer radial außen angeordneten Decklage (4) aus einem faserhaltigen oder ein Fasergeflecht enthaltenden Elastomer, mit einer radial mittig angeordneten Zugträgerlage (6) aus einem gewickelten Zugstrang oder mehreren umfangsseitig ausgerichteten Zugsträngen und einem radial innen angeordneten Unterbau (8) aus einem Elastomer,
wobei in dem Unterbau (8) mindestens eine keilförmige Rippe eingeformt ist, auf dessen Außenflächen eine Beschichtungslage (10) aus einem umfangsseitig offenen Fasergeflecht aufgebracht ist, **dadurch gekennzeichnet, dass** die umfangsseitigen Enden (12, 14) der Beschichtungslage (10) und eine von dem Elastomer des Unterbaus (8) gefüllte Trennfuge (16) zwischen diesen umfangsseitigen Enden (12, 14) der Beschichtungslage (10) mit einem Querstreifen (18) aus einem vulkanisiertauglichen Material bedeckt sind, wobei dieses vulkanisiertaugliche Material im Vergleich zum Elastomer des Unterbaus (8) einen reduzierten Reibungsbeiwert aufweist.

2. Treibriemen nach Anspruch 1, **dadurch gekennzeichnet, dass** es sich bei dem Material des Querstreifens (18) um einen Zweikomponenten-Nitrilschaum (2K-NFT) handelt.

3. Treibriemen nach Anspruch 1 oder 2, **dadurch gekennzeichnet, dass** das Material des Querstreifens (18) mit einem Fasermaterial beflockt ist.

4. Verfahren zur Herstellung eines Treibriemens für einen Zugmitteltrieb mit den folgenden Verfahrensschritten:
a) Aufbringen einer Decklage (4) aus einem faserhaltigen oder ein Fasergeflecht enthaltenden Elastomer auf eine Riemenaufbautrommel (2),
b) Umwickeln der Decklage (4) mit einem Zugstrang oder mehreren umfangsseitig ausgerichteten Zugsträngen zur Bildung einer Zugträgerlage (6),
c) Aufbringen eines Unterbaus (8) aus Elastomer auf die Zugträgerlage (6),
d) Aufbringen einer Beschichtungslage (10) aus einem umfangsseitig offenen Fasergeflecht auf den Unterbau (8),
e) Auftragen eines Querstreifens (18) aus einem vulkanisiertauglichen Material mit im Vergleich zum Elastomer des Unterbaus (8) reduziertem Reibungsbeiwert auf die umfangsseitigen Enden (12, 14) der Beschichtungslage (10) und die Trennfuge (16) zwischen den umfangsseitigen Enden (12, 14) der Beschichtungslage (10),
f) Abnehmen des Riemenrohlings (20) von der Riemenaufbautrommel (2) und Einsetzen desselben in eine heizbare Vulkanisationsform,
g) Vulkanisieren des Riemenrohlings (20) unter Einformung von Rippen in den Unterbau (8), die Beschichtungslage (10) und den Querstreifen (18) des Riemenrohlings (20),
h) nach dem Abkühlen dann Entnahme des Riemenrohlings (20) aus der Vulkanistationsform, und
i) Abschneiden von Treibriemen von dem Riemenrohling (20) und Umstülpen der Treibriemen.

5. Verfahren nach Anspruch 4, **dadurch gekennzeichnet, dass** als dem Material für den Querstreifen (18) ein Zweikomponenten-Nitrilschaum (2K-NFT) verwendet wird.

6. Verfahren nach Anspruch 4 oder 5, **dadurch gekennzeichnet, dass** das Material des Querstreifens (18) mittels einer Rolle aufgetragen wird.

7. Verfahren nach Anspruch 4 oder 5, **dadurch gekennzeichnet, dass** das Material des Querstreifens (18) durch Aufsprühen aufgetragen wird.

8. Verfahren nach einem der Ansprüche 4 bis 7, **dadurch gekennzeichnet, dass** der Querstreifen (18) nach seinem Auftragen mit einem Fasermaterial beflockt wird.

## Claims

1. Drive belt for a traction mechanism drive, having a radially externally arranged top layer (4) composed of a fiber-containing elastomer or of an elastomer comprising a fiber mesh, having a radially centrally arranged tension member layer (6) composed of a wound tension strand or a plurality of circumferentially oriented tension strands, and a radially internally arranged substructure (8) composed of an elastomer,
wherein at least one wedge-shaped rib is integrally formed in the substructure (8), a coating layer (10) composed of a circumferentially open fiber mesh being applied to the outer surfaces of said wedge-shaped rib, **characterized in that** the circumferential ends (12, 14) of the coating layer (10) and a parting joint (16), which is filled by the elastomer of the substructure (8), between said circumferential ends (12, 14) of the coating layer (10) are covered with a transverse strip (18) composed of a vulcanizable material, wherein said vulcanizable material has a reduced friction coefficient in relation to the elastomer of the substructure (8).

2. Drive belt according to Claim 1, **characterized in that** the material of the transverse strip (18) is a two-component nitrile foam (2K-NFT).

3. Drive belt according to Claim 1 or 2, **characterized in that** the material of the transverse strip (18) is flocked with a fiber material.

4. Method for producing a drive belt for a traction mechanism drive, comprising the following method steps:
a) applying a top layer (4) composed of a fiber-containing elastomer or of an elastomer comprising a fiber mesh to a belt building drum (2),
b) wrapping the top layer (4) with a tension strand or a plurality of circumferentially oriented tension strands for forming a tension member layer (6),
c) applying a substructure (8) composed of the elastomer to the tension member layer (6),
d) applying a coating layer (10) composed of a circumferentially open fiber mesh to the substructure (8),
e) applying a transverse strip (18) composed of a vulcanizable material with a reduced friction coefficient in relation to the elastomer of the substructure (8) to the circumferential ends (12, 14) of the coating layer (10) and the parting joint (16) between the circumferential ends (12, 14) of the coating layer (10),
f) removing the belt blank (20) from the belt building drum (2) and inserting said belt blank into a heatable vulcanization mold,
g) vulcanizing the belt blank (20) so as to integrally form ribs into the substructure (8), the coating layer (10) and the transverse strip (18) of the belt blank (20) ,
h) after cooling then extracting the belt blank (20) from the vulcanization mold, and
i) cutting off drive belts from the belt blank (20) and turning the drive belts inside out.

5. Method according to Claim 4, **characterized in that** a two-component nitrile foam (2K-NFT) is used as the material for the transverse strip (18).

6. Method according to Claim 4 or 5, **characterized in that** the material of the transverse strip (18) is applied by means of a roller.

7. Method according to Claim 4 or 5, **characterized in that** the material of the transverse strip (18) is applied by being sprayed on.

8. Method according to one of Claims 4 to 7, **characterized in that** the transverse strip (18), after it has been applied, is flocked with a fiber material.

## Revendications

1. Courroie d'entraînement destinée à un dispositif de transmission par lien souple, comprenant une couche de couverture (4) disposée radialement à l'extérieur et composée d'un élastomère contenant des fibres ou d'une tresse de fibres, une couche de tirant (6) disposée radialement au milieu et composée d'un câble de traction enroulé ou de plusieurs câbles de traction orientés côté circonférentiel, et une couche de base (8) disposée radialement à l'intérieur et composée d'un élastomère,
dans laquelle, dans la couche de base (8) est intégrée au moins une nervure cunéiforme sur les surfaces extérieures de laquelle une couche de revêtement (10) composée d'une tresse de fibres ouverte côté circonférentiel est appliquée,
**caractérisée en ce que** les extrémités côté circonférentiel (12, 14) de la couche de revêtement (10) et une ligne de joint (16) remplie de l'élastomère de la couche de base (8) entre ces extrémités côté circonférentiel (12, 14) de la couche de revêtement (10) sont couvertes par une bande transversale (18) composée d'un matériau apte à la vulcanisation, ce matériau apte à la vulcanisation présentant un coefficient de friction réduit en comparaison avec l'élastomère de la couche de base (8).

2. Courroie d'entraînement selon la revendication 1, **caractérisée en ce que** le matériau de la bande transversale (18) est une mousse nitrile bi-composant (2K-NFT) .

3. Courroie d'entraînement selon la revendication 1 ou 2, **caractérisée en ce que** le matériau de la bande transversale (18) est floqué avec un matériau fibreux.

4. Procédé de fabrication d'une courroie d'entraînement destinée à un dispositif de transmission par lien souple, comprenant les étapes de procédé suivantes consistant à :
a) appliquer une couche de couverture (4) composée d'un élastomère contenant des fibres ou une tresse de fibres sur un tambour de confection de courroie (2),
b) envelopper la couche de couverture (4) avec un câble de traction ou plusieurs câbles de traction orientés côté circonférentiel pour former une couche de tirant (6),
c) appliquer une couche de base (8) composée d'élastomère sur la couche de tirant (6),
d) appliquer sur la couche de base (8) une couche de revêtement (10) composée d'une tresse de fibres ouverte côté circonférentiel,
e) appliquer une bande transversale (18), composée d'un matériau apte à la vulcanisation ayant un coefficient de friction réduit en comparaison avec l'élastomère de la couche de base (8), sur les extrémités côté circonférentiel (12, 14) de la couche de revêtement (10) et la ligne de joint (16) entre les extrémités côté circonférentiel (12, 14) de la couche de revêtement (10),
f) retirer l'ébauche de courroie (20) du tambour de confection de courroie (2) et insérer celle-ci dans un moule de vulcanisation pouvant être chauffé,
g) vulcaniser l'ébauche de courroie (20) en intégrant des nervures dans la couche de base (8), la couche de revêtement (10) et la bande transversale (18) de l'ébauche de courroie (20),
h) après refroidissement, retirer ensuite l'ébauche de courroie (20) du moule de vulcanisation, et
i) découper la courroie d'entraînement de l'ébauche de courroie (20) et retourner les courroies d'entraînement.

5. Procédé selon la revendication 4, **caractérisé en ce qu'**une mousse nitrile bi-composant (2K-NFT) est utilisée comme matériau pour la bande transversale (18) .

6. Procédé selon la revendication 4 ou 5, **caractérisé en ce que** le matériau de la bande transversale (18) est appliqué au moyen d'un rouleau.

7. Procédé selon la revendication 4 ou 5, **caractérisé en ce que** le matériau de la bande transversale (18) est appliqué par pulvérisation.

8. Procédé selon l'une quelconque des revendications 4 à 7, **caractérisé en ce que** la bande transversale (18) est floquée avec un matériau fibreux après avoir été appliquée.
